# EUROPEAN PATENT APPLICATION

(11) **EP 4 819 020 A1**
(43) Date of publication of application: **07.10.2026**
(21) Application number: 26171062.8
(22) Date of filing: 07.04.2026
(51) Int. Cl.: G06Q 30/06, G06Q 20/38, G06Q 50/18, H04L 9/00

(54) **BLOCKCHAIN BASED SYSTEM AND METHOD FOR MANAGING TRANSACTION TO TRANSFER OWNERSHIP OF VEHICLES**

(30) Priority: 03.04.2025 US 202519169929; 02.04.2026 US 202619637380
(71) Applicant: Miles Per Hour Inc., Wilmington, DE 19801 (US)
(72) Inventor: Antoine, Nelson, Wilmington, 19801 (US)
(74) Representative: Beck Greener LLP

(57) **Abstract**

A blockchain based system and method for managing transaction to transfer ownership of vehicles. The system is configured to establish a smart contract between a first user and a second user. The smart contract comprises terms to manage transaction to transfer ownership of vehicle. The system is further configured to execute the smart contract between the first user and the second user. The system is further configured to provide a payment code to transfer payment between the first user and the second user. The system is further configured to instantly transfer ownership of the vehicle on completion of transfer of payment amount. The system is further configured to create a digital certificate comprising information related to the transaction of payment amount and transfer of ownership between the first user and the second user.

## Description

### TECHNICAL FIELD OF THE PRESENT INVENTION

The present invention generally relates to a system and method for managing transactions to transfer ownership of vehicles. More specifically, the present invention relates to a blockchain based system and method for managing title transfer and payment to transfer ownership of vehicle.

### BACKGROUND OF THE PRESENT INVENTION

In the automobile market, consumers typically sell or trade in used automobiles to dealers or dealerships, or privately sell to other consumers. In a general vehicle transaction process, a buyer is required to send a complete payment amount to the seller. Further, the buyer needs to send certain information in order to complete a transaction with the seller, including information of a personal or sensitive nature for individuals or companies. After receiving the complete payment, the seller transfers the legal title to the buyer. This traditional process includes a large degree of uncertainty for consumers, including both a selling consumer and a purchasing consumer.

The traditional process requires the buyer to transfer payment and send sensitive information even before the completion of the transaction to demonstrate that the buyer has the assets to close the transaction to the satisfaction of the seller. The buyer needs to be anxious and uncertain until the buyer receives the legal title. Sometimes, the buyers may promise to send the payment to the seller after the vehicle title transfer and may not intentionally transfer, or delays the transfer of payment, after receiving the legal title. Sometimes, buyers or sellers may be scammers, which puts the consumer at risk of serious frauds.

In addition, traditional ownership transfer requires manual documentation of vehicle ownership details, billing details, registration forms, purchase agreements, and title transfer agreements. The chances of making errors in manual paperwork and documentation are very high. Errors in these documents lead to many complications or delays in the transfer process. Further, consumers need to track vehicle ownership, especially joint or partial vehicle ownership to establish, preserve, and validate ownership rights and responsibilities and avoid costly litigation.

In conventional vehicle ownership transfer systems, the processes governing financial settlement and legal title reassignment are executed across separate and independent systems. Financial payment systems facilitate transfer of funds between parties, while legal title transfer is governed by external regulatory authorities such as state departments of motor vehicles or centralized registries. These systems operate asynchronously and lack a unified execution framework to ensure that payment completion and title reassignment occur in a coordinated manner. As a result, discrepancies frequently arise in which payment is completed without corresponding title transfer, or title is reassigned without verified payment settlement, thereby introducing risks of fraud, dispute, and legal ambiguity.

Existing blockchain-based systems primarily function as distributed ledgers for recording transaction history and do not provide mechanisms to control or enforce legal ownership states tied to a specific vehicle identifier. Similarly, existing payment systems enable transfer of funds but lack the capability to verify or trigger updates to vehicle ownership records. Title management systems, on the other hand, maintain ownership records but do not integrate real-time payment verification. Accordingly, none of the existing systems provide a unified solution capable of synchronizing financial settlement with legally recognized vehicle title transfer at the level of a unique vehicle identification number (VIN).

Therefore, there exists a need for a system that eliminates the timing gap between payment execution and title transfer by providing a unified transaction control mechanism that enforces synchronized state transitions between financial and legal ownership systems.

Few existing patent applications attempt to address the problems cited in the background as prior art over the presently disclosed subject matter and are explained as follows.

A prior art US 10997551 B2, assigned to Dan Kikinis, entitled "System and method for automotive inventory management and recordkeeping using multi-tiered distributed network transactional database" discloses a system that provides blockchain-based permanent storage of manufacture, parts, maintenance, and any other records associated with an automobile. The system enables a technician, dealer, or independent repair shop to maintain and track a plurality of unique tokens for records of parts or components of vehicles in the blockchain ledger for inventory management.

Another prior art, US 11250493 B2, assigned to Thomas M. Issacson, et.al., entitled "System and method for performing social media cryptocurrency transactions" discloses a social media software module operating on a user device. The social media software module is configured to enable communication between the first and second users, facilitate payment authorization, and initiate payment from the first user to the second user. This approach incorporates the cryptocurrency wallet into the social media application to enable easy payments between users using a cryptocurrency. A smart contract is created to receive information about a sale price and receive a confirmation of the product from the seller. The smart contracts are executed by the blockchain network based on multiple variable node types. However, the prior art lacks to provide a secure and tamper-proof system and method for managing title transfer and payment to transfer ownership of vehicle.
Therefore, there is a need for a system and method for managing transaction to transfer ownership in the automotive industry that overcomes the above-mentioned limitations.

### SUMMARY OF THE PRESENT INVENTION

The present invention generally discloses a system and method for managing transaction to transfer ownership of a vehicle. Also, the present invention discloses a blockchain-based system and method that facilitate instant transaction and title transfer, thereby reducing transaction times and costs.

According to the present invention, the system comprises one or more user devices including a first user device associated with a first user and a second user device associated with a second user. The first user is a buyer of the vehicle and the second user is a seller of the vehicle. The system further comprises at least one blockchain server. The blockchain server comprises a distributed blockchain ledger. The blockchain server is in communication with at least one database, the first user device and the second user device via a network. The blockchain server comprises at least one memory configured to store a set of program modules and at least one processor configured to execute one or more program modules stored in the memory.

In one embodiment, the set of modules comprise an input module. The input module is configured to receive identification information and ownership information of the vehicle from at least one of the first user and the second user. The identification information includes a vehicle make, a vehicle model, a vehicle year information and a vehicle identification number. The ownership information includes a payment amount for legal title and a legal title term. The input module is further configured to receive a first user information from the first user and a second user information from the second user. The first user information includes information related to a first digital wallet and the second user information includes information related to a second digital wallet.

In one embodiment, the set of modules further comprise a smart contract module. The smart contract module is configured to establish and execute a smart contract between the first user and the second user. The smart contract comprises terms to manage transaction to transfer ownership of vehicle.

In one embodiment, the set of modules further comprise a payment module. The payment module is configured to provide a payment code to transfer the payment amount and enable at least one of the first user and the second user to transfer the payment amount using the payment code. In one embodiment, the payment code is a machine-readable code. The payment code is a quick response code. The payment module is configured to transfer the payment amount from the first digital wallet of the first user to the second digital wallet of the second user. In one embodiment, the payment module is configured to automatically transfer the payment amount from the first digital wallet to the second digital wallet on the execution of the smart contract between the first user and the second user.

In one embodiment, the set of modules further comprise a title transfer module. The title transfer module is configured to transfer ownership of the vehicle to at least one of the first user and the second user on completion of transfer of payment amount. In one embodiment, the set of modules further comprise a certificate generation module. The certificate generation module is configured to provide a digital certificate comprising vehicle identification information on completion of transfer of ownership of the vehicle. In one embodiment, the set of modules further comprise a storage module. The storage module is configured to store a payment data and ownership transfer data related to the first user and the second user to the distributed blockchain ledger. In one embodiment, the payment data includes the payment amount transferred to at least one of the first user and the second user and the ownership transfer data includes the digital certificate and the smart contract.

In one embodiment, the set of modules further comprises a tracking module. The tracking module is configured to enable the first user and the second user to track transaction related to the payment amount and title transfer of vehicle. The tracking module is further configured to provide real-time update to the first user and second user regarding the transaction of payment amount and title transfer of vehicle.

The present invention further discloses a method for managing transaction to transfer ownership of vehicles. The method is executed in the system comprising a first user device associated with a first user, a second user device associated with a second user and at least one blockchain server comprising a distributed blockchain ledger. The blockchain server is in communication with at least one database, the first user device and the second user device via a network. The blockchain server comprises at least one memory configured to store a set of program modules and at least one processor configured to execute one or more program modules stored in the memory.

At one step, an input module at the blockchain server is configured to receive identification information and ownership information of the vehicle from at least one of the first user and the second user. The identification information includes a vehicle make, a vehicle model, a vehicle year information and a vehicle identification number. The ownership information including a payment amount for legal title and a legal title term. At another step, a smart contract module at the blockchain server is configured to establish and execute a smart contract between the first user and the second user. The smart contract comprises terms to manage transaction to transfer ownership of vehicle. At another step, a payment module at the blockchain server is configured to provide a payment code to transfer a payment amount.

At yet another step, the payment module at the blockchain server is configured to enable at least one of the first user and the second user to transfer the payment amount using the payment code. In one embodiment, the payment code is a machine-readable code. In another embodiment, the payment code is a quick response code. At yet another step, a title transfer module at the blockchain server is configured to transfer ownership of the vehicle to at least one of the first user and the second user on completion of transfer of payment amount.

At yet another step, a certificate generation module at the blockchain server is configured to provide a digital certificate comprising identification information of vehicle on completion of transfer of ownership of the vehicle. At yet another step, a storage module at the blockchain server is configured to store a payment data and ownership transfer data related to the first user and the second user to the distributed blockchain ledger. In an example, the first user is a buyer of the vehicle and the second user is a seller of a vehicle.

At yet another step, the input module at the blockchain server is configured to receive a first user information from the first user and a second user information from the second user. The first user information includes information related to a first digital wallet and the second user information includes information related to a second digital wallet. At yet another step, the payment module at the blockchain server is configured to transfer the payment amount from the first digital wallet of the first user to the second digital wallet of the second user.

At yet another step, the payment module at the blockchain server is configured to automatically transfer the payment amount from the first digital wallet to the second digital wallet on the execution of the smart contract between the first user and the second user. At yet another step, a tracking module at the blockchain server is configured to enable the first user and the second user to track transaction related to payment amount and title transfer of vehicle. At yet another step, the tracking module at the blockchain server is configured to provide a real-time update to the first user and second user regarding the transaction of payment amount and title transfer of vehicle.

The above summary contains simplifications, generalizations and omissions of detail and is not intended as a comprehensive description of the claimed subject matter but, rather, is intended to provide a brief overview of some of the functionality associated therewith. Other systems, methods, functionality, features and advantages of the claimed subject matter will be or will become apparent to one with skill in the art upon examination of the following figures and detailed written description.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 exemplarily illustrates an environment of a blockchain-based system for managing transaction to transfer ownership of vehicles, according to an embodiment of the present invention.
FIG. 2 exemplarily illustrates a block diagram of the components of the blockchain server and devices in communication with the blockchain server, according to an embodiment of the present invention.
FIG. 3 exemplarily illustrates a flowchart of a method for managing transactions to transfer ownership of vehicles, according to an embodiment of the present invention.
FIG. 4 illustrates an exemplary VIN-linked transaction state model showing sequential state transitions for a vehicle ownership transfer, including initialization, payment verification, ownership update, and blockchain commitment.
FIG. 5 illustrates an exemplary atomic settlement architecture in which a VIN-linked transaction object is shared across a payment module, a title transfer module, and a blockchain validation module within a single execution framework.
FIG. 6 illustrates an exemplary system architecture including user devices, a VIN-linked transaction engine, payment and title modules, and a blockchain ledger configured to maintain an authoritative ownership chain.

### DETAILED DESCRIPTION OF EXAMPLE EMBODIMENTS

A description of embodiments of the present invention will now be given with reference to the Figures. It is expected that the present invention may be embodied in other specific forms without departing from its spirit or essential characteristics. The described embodiments are to be considered in all respects only as illustrative and not restrictive.

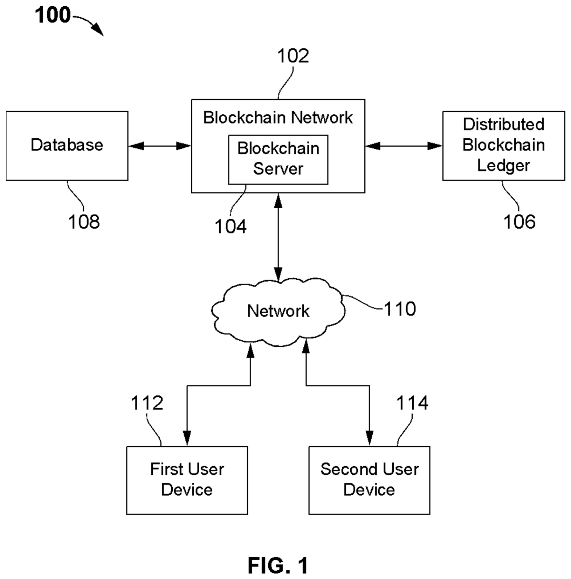

FIG. 1 exemplarily illustrates an environment 100 of a blockchain-based system for managing transaction to transfer ownership of vehicles, according to an embodiment of the present invention. The system comprises a blockchain network 102 comprising a blockchain server 104 and a distributed blockchain ledger 106 maintained by the blockchain server 104. The system further comprises a database 108 in communication with the blockchain server 104. The system further comprises a first user device 112 associated with a first user and a second user device 114 associated with a second user. The first user device 112 and the second user device 114 are in communication with the blockchain server 104 via the network 110. The first user device 112 and the second user device 114 are also commonly referred as user device (112, 114). The first user and the second user are also commonly referred as user. In an example, the first user is a buyer of a vehicle and the second user is a seller of a vehicle.

The user device (112, 114) is a computing device configured to provide access to the service provided by the blockchain server 104. The user device (112, 114) is configured to provide an interface to access the services provided by the blockchain server 104. The interface, for example, an application that allows the user device (112, 114) to wirelessly connect with the blockchain server 104 via the network 110. The user device (112, 114) may be, for example, a desktop computer, a laptop computer, a mobile phone, a personal digital assistant, and the like.

The blockchain server 104 could be any suitable server(s) for storing information, data, programs, and/or any other suitable content. In an example, the blockchain server 104 is at least one of a general or special purpose computer. The blockchain server 104 operates as a single computer, which could be a hardware and/or software server, a workstation, a desktop, a laptop, a tablet, a mobile phone, a mainframe, a supercomputer, a server farm, and so forth. Although the blockchain server 104 is illustrated as a single device, the functions performed by blockchain server 104 could be performed using any suitable number of computing devices. In one embodiment, the blockchain network 102 comprises a plurality of computing nodes. The set of computing nodes are configured to implement the functions performed by blockchain server 104. Further, each computing node is configured to maintain a transaction record related to the transaction to transfer ownership of vehicle. The set of computing nodes together maintain the distributed blockchain ledger 106.

The distributed blockchain ledger 106 is comprised of groupings of transaction record bundled together into one or more blocks. When a change to the distributed ledger 106 is made (e.g., when a new transaction and/or block is created), each node forms a consensus as to how the change is integrated into the distributed blockchain ledger 106. Upon consensus, the agreed upon change is pushed out to each node so that each node maintains an identical copy of the updated distributed blockchain ledger 106.

In one embodiment, the blockchain server 104 is further configured to maintain a VIN-linked transaction state model, wherein each transaction is associated with a unique vehicle identification number serving as a primary key for tracking ownership and payment states. The VIN-linked transaction state model enables all system modules to operate on a shared transaction record, thereby ensuring consistency across payment processing, title transfer, and data storage operations.

In one embodiment, the system generates a transaction object associated with a vehicle, wherein the transaction object comprises a current ownership state, a pending ownership state, a payment status, and jurisdictional metadata associated with the vehicle title. The transaction object is configured to represent the lifecycle of a vehicle ownership transfer process and is updated dynamically as the transaction progresses.

The network 110 generally represents one or more interconnected networks, over which the user device (112, 114) and the blockchain server 104 could communicate with each other. The network 110 may include packet-based wide area networks (such as the Internet), local area networks (LAN), private networks, wireless networks, satellite networks, cellular networks, paging networks, and the like. A person skilled in the art will recognize that the network 110 may also be a combination of more than one type of network. For example, the network 110 may be a combination of a LAN and the Internet. In addition, the network 110 may be implemented as a wired network, or a wireless network or a combination thereof.

The database 108 is accessible by the blockchain server 104. In an example, the database 108 resides in the blockchain server 104. In another example, the database 108 resides separate from the blockchain server 104. Regardless of location, the database 108 comprises a memory to store and organize data for use by the blockchain server 104. The database 108 stores information related to the first user and information related to the second user.

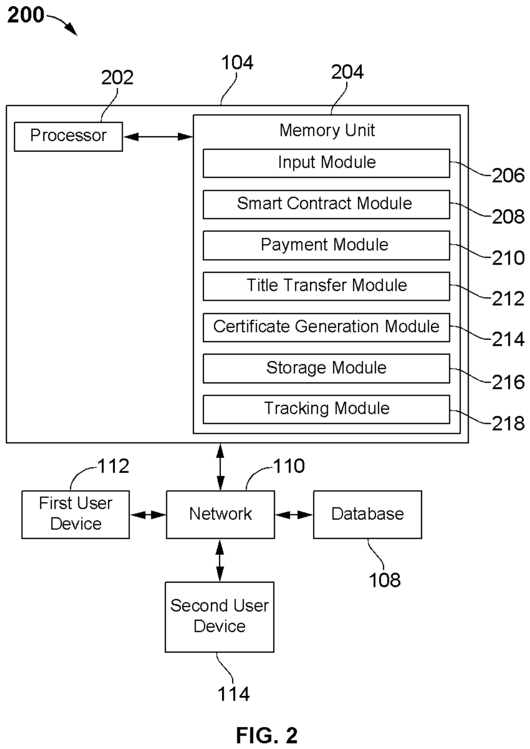

FIG. 2 exemplarily illustrates a block diagram 200 of the components of the blockchain server 104 and devices (112, 114, 108) in communication with the blockchain server 104, according to an embodiment of the present invention. The blockchain server 104 comprises one or more processors 202 and one or more memories 204 storing one or more program modules. The processor 202 is configured to execute one or more program modules. The program modules comprise an input module 206, a smart contract module 208, a payment module 210, a title transfer module 212, a certificate generation module 214, a storage module 216, and a tracking module 218.

The input module 206 is configured to receive identification information and ownership information of the vehicle from the second user. The identification information includes, but not limited to, a vehicle make, a vehicle model, a vehicle year information and a vehicle identification number (VIN). The ownership information includes, but not limited to, a payment amount for legal title and a legal title term. The input module 206 is further configured to receive the first user information from the first user and the second user information from the second user. The first user information includes information related to a first digital wallet and the second user information includes information related to a second digital wallet.

The smart contract module 208 is configured to establish a smart contract between the first user and the second user. The smart contract module 208 is further configured to execute the smart contract between the first user and the second user. The smart contract comprises terms to manage transaction to transfer ownership of vehicle. The terms include, but not limited to, purchase price, payment terms, identification information and ownership information of the vehicle.

In one embodiment, the smart contract module 208 is configured to encode vehicle-specific ownership transfer conditions based on the VIN-linked transaction object. The smart contract includes payment verification conditions, title reassignment conditions, and jurisdictional validation requirements associated with the vehicle title. The smart contract is further configured to enforce execution constraints such that title transfer cannot occur unless all predefined payment conditions are satisfied.

In one embodiment, the title transfer module 212 is configured to execute an ownership state transition only upon detection of a verified payment completion event associated with the VIN-linked transaction object. The ownership state transition includes updating the current owner field to reflect the buyer and modifying the title status to indicate completion of transfer. The system ensures that ownership state changes are executed automatically based on system-verified conditions rather than manual input or user confirmation.

In one embodiment, the distributed blockchain ledger 106 functions as an authoritative ownership record for vehicles by maintaining an immutable chain of ownership transactions associated with each VIN. The blockchain ledger validates ownership transitions, prevents duplicate or conflicting transfers, and ensures permanence of title updates. The blockchain further provides cryptographic verification of transaction execution, thereby establishing trust in the integrity of vehicle ownership records.

In one embodiment, the system represents vehicle ownership as a structured digital record associated with a VIN. The structured digital record comprises fields including a current owner identifier, a previous owner identifier, a title status, a jurisdiction identifier, a transaction identifier, a payment status, an ownership transfer status, a smart contract reference, a certificate reference, a timestamp, and a blockchain reference. The structured digital record enables the system to manage ownership as a dynamic, state-controlled entity rather than a static document.

In one embodiment, the payment module 210 is configured to associate each payment transaction with a VIN-specific transaction instance. The payment module verifies that the payment corresponds to the vehicle transaction by matching transaction identifiers and validating that the payment amount satisfies the terms encoded within the smart contract. The payment module further verifies that the payment is completed and irreversible prior to enabling subsequent title transfer operations.

The payment module 210 is configured to provide a payment code to transfer payment to the second user. The payment module 210 is further configured to enable the first user to transfer a payment amount to the second user using the payment code. In one embodiment, the payment code is a machine-readable code. In another embodiment, the payment code is a quick-response (QR) code. The first user could scan the QR code, which initiates the transfer of payment amount from the first digital wallet to the second digital wallet. In another embodiment, the payment module 210 is configured to automatically transfer payment amount from the first digital wallet to the second digital wallet on execution of the smart contract between the first user and the second user. Thereby, the present invention instantly transfers payment amount on execution of the smart contract.

The title transfer module 212 is configured to transfer ownership of the vehicle to the first user on completion of transfer of payment amount. Thereby, the system instantly transfers the legal title of the vehicle and enables to acquire the payment amount for the transfer of ownership of the vehicle. The certificate generation module 214 is configured to create and provide a digital certificate comprising vehicle identification information on completion of transfer of ownership of the vehicle. Further, the digital certificate is a secure, tamper-proof digital certificate. The identification information of vehicle includes, but not limited to, a vehicle make, a vehicle model, a vehicle year information and a vehicle identification number.

The storage module 216 is configured to store payment data and ownership transfer data related to the first user and the second user to the distributed blockchain ledger 106. The distributed blockchain ledger 106 is secured using cryptographic techniques, which ensures that the data stored in the distributed blockchain ledger 106 is tamper-proof and immutable. The payment data includes, but not limited to, payment amount transferred between the first user and the second user and mode of transfer of payment. The ownership transfer data includes, but not limited to, digital certificate of the vehicle and smart contract between the first user and the second user.

The tracking module 218 is configured to enable the user to track the payment transaction between the first user and the second user. The tracking module 218 is further configured to enable the user to track details related to title transfer of the vehicle. The tracking module 218 is further configured to provide real-time update regarding the status of transaction, which includes title transfer and payment to transfer ownership of the vehicle.

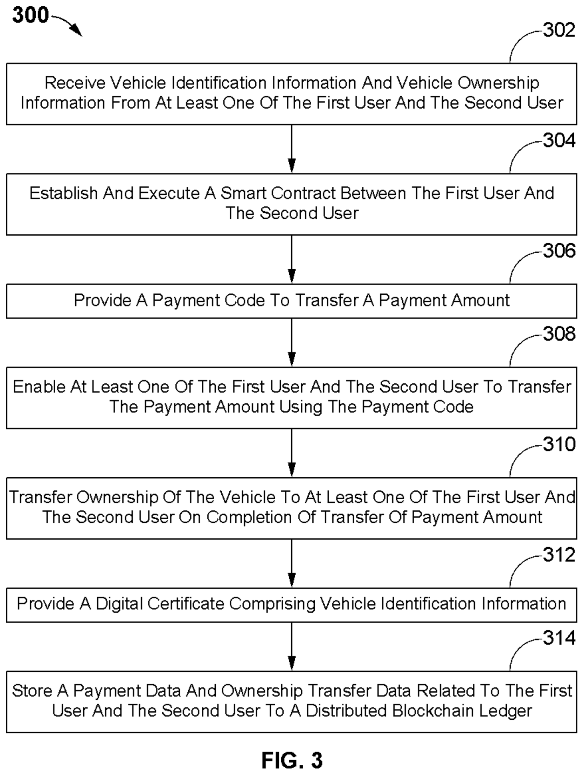

FIG. 3 exemplarily illustrates a flowchart 300 of a method for managing transaction to transfer ownership of vehicles, according to an embodiment of the present invention. The method is executed in the system comprising the first user device 112 associated with a first user, the second user device 114 associated with a second user and at least one blockchain server 104 comprising the distributed blockchain ledger 106. The blockchain server 104 is in communication with at least one database 108, the first user device 112 and the second user device 114 via the network 110. The blockchain server 104 comprises at least one memory 204 configured to store a set of program modules and at least one processor 202 configured to execute one or more program modules stored in the memory 204.

At step 302, the input module 206 at the blockchain server 104 is configured to receive identification information and ownership information of the vehicle from at least one of the first user and the second user. The identification information includes a vehicle make, a vehicle model, a vehicle year information and a vehicle identification number. The ownership information including a payment amount for legal title and a legal title term. The input module 206 at the blockchain server 104 is configured to receive a first user information from the first user and a second user information from the second user. The first user information includes information related to the first digital wallet and the second user information includes information related to the second digital wallet. In an example, the first user is a buyer of the vehicle and the second user is a seller of a vehicle.

At step 304, the smart contract module 208 at the blockchain server 104 is configured to establish and execute a smart contract between the first user and the second user. The smart contract comprises terms to manage transaction to transfer ownership of vehicle. At step 306, the payment module 210 at the blockchain server 104 is configured to provide a payment code to transfer a payment amount.

At step 308, the payment module 210 at the blockchain server 104 is configured to enable at least one of the first user and the second user to transfer the payment amount using the payment code. In one embodiment, the payment code is a machine-readable code. In another embodiment, the payment code is a quick response code. The payment module 210 at the blockchain server 104 is configured to transfer the payment amount from the first digital wallet of the first user to the second digital wallet of the second user. In another embodiment, the payment module 210 at the blockchain server 104 is configured to automatically transfer the payment amount from the first digital wallet to the second digital wallet on execution of the smart contract between the first user and the second user.

At step 310, the title transfer module 212 at the blockchain server 104 is configured to transfer ownership of the vehicle to at least one of the first user and the second user on completion of transfer of payment amount. At step 312, the certificate generation module 214 at the blockchain server 104 is configured to provide a digital certificate comprising identification information of vehicle on completion of transfer of ownership of the vehicle.

At step 314, the storage module 216 at the blockchain server 104 is configured to store a payment data and ownership transfer data related to the first user and the second user to the distributed blockchain ledger 106. The payment data includes payment amount transferred to at least one of the first user and the second user and the ownership transfer data includes the digital certificate and the smart contract. Further, the tracking module 218 at the blockchain server 104 is configured to enable the first user and the second user to track transaction related to payment amount and title transfer of vehicle. The tracking module 218 at the blockchain server 104 is configured to provide a real-time update to the first user and second user regarding the transaction of payment amount and title transfer of vehicle.

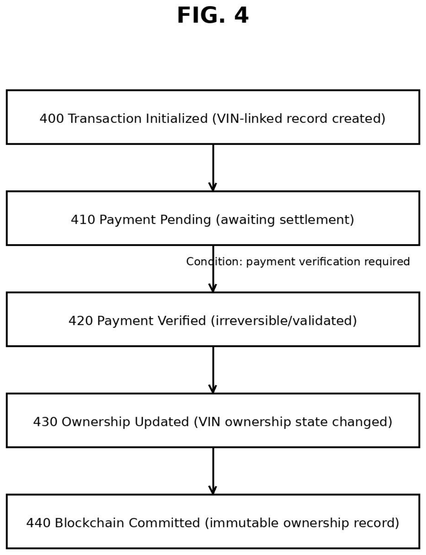

FIG. 4 illustrates an exemplary VIN-linked transaction state model 400 configured to control execution of a vehicle ownership transfer process. The transaction state model begins at state 400, in which a VIN-linked transaction object is initialized and associated with a vehicle identifier. The system then progresses to state 410, representing a payment pending condition in which the system awaits completion of a payment transaction associated with the VIN-linked transaction object.

Upon verification of payment completion, the system transitions to state 420, in which the payment is validated as complete and irreversible. The system enforces a conditional transition between state 410 and state 420, such that progression is permitted only upon satisfaction of predefined payment verification criteria.

Following payment verification, the system transitions to state 430, in which the ownership state associated with the VIN is updated to reflect transfer from a seller to a buyer. The ownership update is performed automatically by the system based on satisfaction of the payment condition.

The system then transitions to state 440, in which the updated ownership state is committed to a distributed blockchain ledger, thereby establishing an immutable and authoritative ownership record. The transaction state model ensures that each transition occurs in a controlled sequence and prevents execution of ownership transfer prior to verified payment.

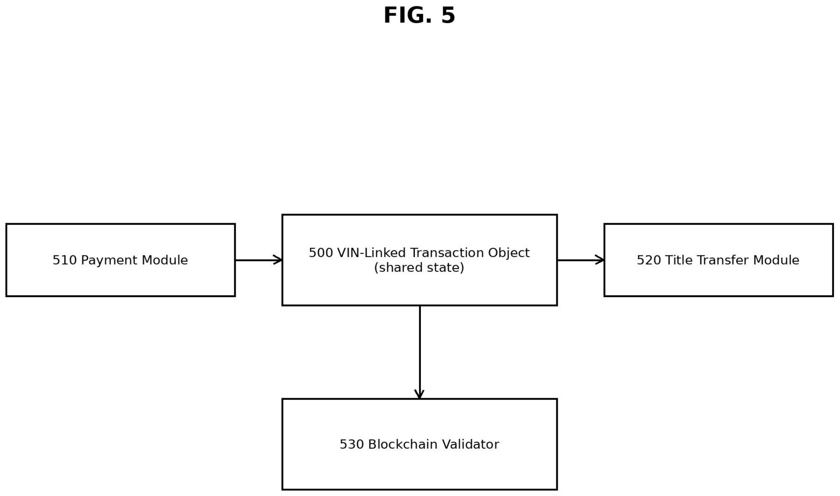

FIG. 5 illustrates an exemplary atomic settlement architecture 500 in which multiple system modules operate on a shared VIN-linked transaction object. The VIN-linked transaction object 500 maintains a unified representation of payment status and ownership state associated with a vehicle.

A payment module 510 is configured to initiate and verify a payment transaction associated with the VIN-linked transaction object. The payment module updates the payment status within the shared transaction object upon completion and validation of payment.

A title transfer module 520 is configured to read the payment status from the VIN-linked transaction object and execute an ownership state transition only upon confirmation that payment conditions have been satisfied. The title transfer module does not independently initiate ownership transfer, but instead operates based on the shared transaction state.

A blockchain validation module 530 is configured to commit the updated ownership state to a distributed ledger, thereby providing a permanent and verifiable record of the transaction. The blockchain validation module ensures that the ownership state transition is recorded in an immutable data structure.

The system architecture of FIG. 5 forms a single execution loop in which all modules operate on a shared transaction object, thereby eliminating asynchronous execution between payment processing and title transfer operations and ensuring synchronized state transitions.

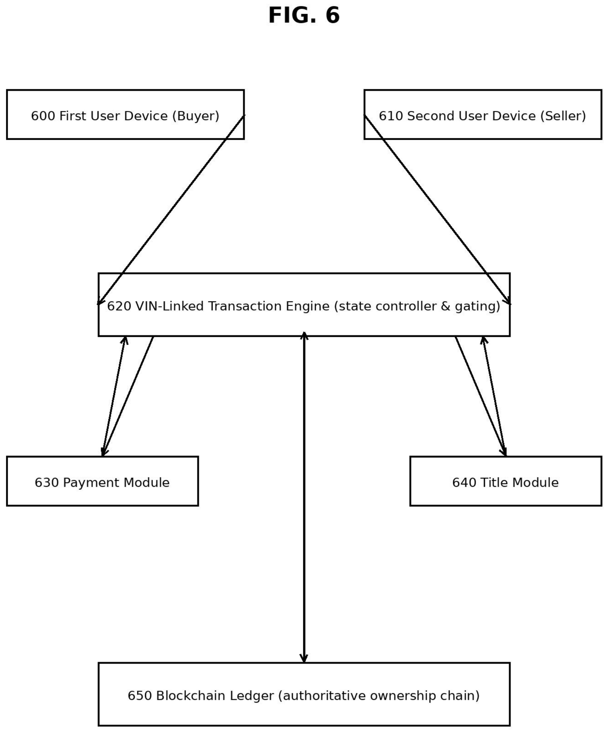

FIG. 6 illustrates an exemplary system architecture 600 for managing vehicle ownership transfer. The system includes a first user device 600 associated with a buyer and a second user device 610 associated with a seller. The user devices are configured to interact with a VIN-linked transaction engine 620.

The VIN-linked transaction engine 620 functions as a central state controller configured to manage transaction execution and enforce sequencing constraints. The transaction engine maintains a VIN-linked transaction record and coordinates interactions between system modules.

A payment module 630 is operatively coupled to the VIN-linked transaction engine 620 and is configured to process and verify payment transactions associated with the VIN-linked transaction record. A title module 640 is also coupled to the transaction engine and is configured to execute ownership state updates based on payment verification.

A blockchain ledger 650 is configured to store ownership records associated with vehicles and to maintain an immutable ownership chain. The VIN-linked transaction engine 620 transmits updated ownership states to the blockchain ledger 650 upon completion of transaction conditions.

The system architecture ensures that all modules operate on a shared transaction state and that ownership updates are executed only after payment verification, thereby preventing inconsistencies between financial settlement and legal ownership records.

In one embodiment, the method further comprises enforcing a state-controlled transaction sequence, wherein each step of the transaction is gated by completion of a preceding step. The system prevents progression to title transfer unless payment verification is successfully completed, and prevents finalization of the transaction unless ownership state updates are recorded in the distributed blockchain ledger. This sequential gating ensures that the system does not enter an inconsistent state.

In one embodiment, the method further comprises handling transaction interruptions by maintaining a persistent transaction state. In the event of payment failure or network disruption, the system retains the transaction in a pending state without modifying the ownership record. Upon restoration of connectivity or completion of payment, the system resumes processing from the last valid state, thereby ensuring continuity and consistency of the transaction.

Advantageously, the system instantly transfers legal title of the vehicle and acquires payment amount for the transfer of ownership of the vehicle. The instant payment settlement and title transfer reduces time and cost of transaction of title transfer in the automobile industry. The system uses smart contracts to facilitate instant payment settlements and title transfers between parties and integrates with mobile devices to provide a seamless user experience. The system further provides a secure tamper-proof distributed blockchain ledger 106 to store payment data and ownership transfer data. In conclusion, the present invention provides a secure, efficient, and cost-effective system for managing automotive payments and title transfers using blockchain technology and smart contracts, while also providing a seamless user experience through integration with mobile devices.

Further, it should be understood that the present invention provides a vehicle-specific transaction control architecture that synchronizes financial settlement with legal ownership transfer at the level of a unique vehicle identifier. By enforcing a unified execution framework, the system eliminates discrepancies between payment status and title status, thereby preventing fraudulent transactions and reducing legal uncertainty. The system further ensures that a vehicle cannot exist in a state where payment is completed without title transfer or title is transferred without payment verification.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular embodiments disclosed for carrying out this disclosure, but that the disclosure will include all embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. **It** will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described embodiments were chosen and described in order to best explain the principles of the disclosure and the practical application, and to enable others of ordinary skill in the art to understand the disclosure for various embodiments with various modifications as are suited to the particular use contemplated.

## Claims

1. A blockchain based system for managing transaction to transfer ownership of vehicles, comprising:
a first user device associated with a first user;
a second user device associated with a second user, and
at least one blockchain server comprising a distributed blockchain ledger, wherein the blockchain server is in communication with at least one database, the first user device and the second user device via a network, wherein the blockchain server comprises at least one memory configured to store a set of program modules and at least one processor configured to execute one or more program modules stored in the memory, wherein the set of modules comprises:
an input module configured to receive identification information and ownership information of the vehicle from at least one of the first user and the second user, wherein the identification information includes a vehicle make, a vehicle model, a vehicle year information and a vehicle identification number, and wherein the ownership information including a payment amount for legal title and a legal title term,
a smart contract module configured to establish and execute a smart contract between the first user and the second user, wherein the smart contract comprises terms to manage transaction to transfer ownership of vehicle,
a payment module configured to provide a payment code to transfer the payment amount and enable at least one of the first user and the second user to transfer the payment amount using the payment code,
a title transfer module configured to transfer ownership of the vehicle to at least one of the first user and the second user on completion of transfer of payment amount;
a certificate generation module configured to provide a digital certificate comprising vehicle identification information on completion of transfer of ownership of the vehicle, and
a storage module configured to store a payment data and ownership transfer data related to the first user and the second user to the distributed blockchain ledger.

2. The blockchain based system of claim 1, wherein the input module is further configured to receive a first user information from the first user and a second user information from the second user, wherein the first user information includes information related to a first digital wallet and the second user information includes information related to a second digital wallet.

3. The blockchain based system of claim 2, wherein the payment module is configured to transfer the payment amount from the first digital wallet of the first user to the second digital wallet of the second user.

4. The blockchain based system of claim 2 or 3, wherein the payment module is configured to automatically transfer the payment amount from the first digital wallet to the second digital wallet on execution of the smart contract between the first user and the second user.

5. The blockchain based system of any preceding claim, wherein the modules further comprise a tracking module configured to enable the first user and the second user to track transaction related to payment amount and title transfer of vehicle.

6. The blockchain based system of claim 5, wherein the tracking module is further configured to provide real-time update to the first user and second user regarding the transaction of payment amount and title transfer of vehicle.

7. A blockchain based method for managing transaction to transfer ownership of vehicles, comprising:
providing a system comprising a first user device associated with a first user, a second user device associated with a second user and at least one blockchain server comprising a distributed blockchain ledger, wherein the blockchain server is in communication with at least one database, the first user device and the second user device via a network, wherein the blockchain server comprises at least one memory configured to store a set of program modules and at least one processor configured to execute one or more program modules stored in the memory;
receiving, at the blockchain server via an input module, identification information and ownership information of the vehicle from at least one of the first user and the second user, wherein the identification information includes a vehicle make, a vehicle model, a vehicle year information and a vehicle identification number, and wherein the ownership information including a payment amount for legal title and a legal title term;
establishing and executing, at the blockchain server via a smart contract module, a smart contract between the first user and the second user, wherein the smart contract comprises terms to manage transaction to transfer ownership of vehicle; providing, at the blockchain server via a payment module, a payment code to transfer a payment amount;
enabling, at the blockchain server via the payment module, at least one of the first user and the second user to transfer the payment amount using the payment code;
transferring, at the blockchain server via a title transfer module, ownership of the vehicle to at least one of the first user and the second user on completion of transfer of payment amount;
providing, at the blockchain server via a certificate generation module, a digital certificate comprising identification information of vehicle on completion of transfer of ownership of the vehicle, and
storing, at the blockchain server via a storage module, a payment data and ownership transfer data related to the first user and the second user to the distributed blockchain ledger.

8. The blockchain based method of claim 11 or the blockchain based system of any of claims 1 to 6, wherein the first user is a buyer of the vehicle and the second user is a seller of a vehicle.

9. The blockchain based method of claim 8, further comprising a step of: receiving, at the blockchain server via the input module, a first user information from the first user and a second user information from the second user, wherein the first user information includes information related to a first digital wallet and the second user information includes information related to a second digital wallet.

10. The blockchain based method of claim 8 or 9, further comprising a step of: transferring, at the blockchain server via the payment module, the payment amount from the first digital wallet of the first user to the second digital wallet of the second user.

11. The blockchain based method of any of claims 8 to 10, further comprising the step of: automatically transferring, at the blockchain server via the payment module, payment amount from the first digital wallet to the second digital wallet on execution of the smart contract between the first user and the second user.

12. The blockchain based method of any of claims 7 to 11, further comprising the step of: enabling, at the blockchain server via a tracking module, the first user and the second user to track transaction related to payment amount and title transfer of vehicle.

13. The blockchain based method of any of claims 7 to 12, further comprising the step of: providing, at the blockchain server via a tracking module, real-time update to the first user and second user regarding the transaction of payment amount and title transfer of vehicle.

14. The blockchain based method of any of claims 7 to 13 or the blockchain based system of any of claims 1 to 6, wherein the payment code is a machine-readable code.

15. The blockchain based method of any of claims 7 to 14 or the blockchain based system of any of claims 1 to 6, wherein the payment code is a quick response code.

16. The blockchain based method of claims 7 to 15 or the blockchain based system of any of claims 1 to 6, wherein the payment data includes payment amount transferred to at least one of the first user and the second user and the ownership transfer data includes the digital certificate and the smart contract.
